# EUROPÄISCHE PATENTSCHRIFT

(11) **EP 2 215 912 B1**
(45) Veröffentlichungstag und Bekanntmachung des Hinweises auf die Patenterteilung: **23.05.2012**
(21) Anmeldenummer: 09001826.8
(22) Anmeldetag: 10.02.2009
(51) Int. Cl.: A22C 11/04, A22C 11/06

(54) **Schneidventil und Verfahren zum Portionieren**
Cutting valve and portioning method
Soupape de coupe et procédé de mise en portion

(43) Veröffentlichungstag der Anmeldung: 11.08.2010
(73) Patentinhaber: Albert Handtmann Maschinenfabrik GmbH & Co. KG, 88400 Biberach (DE)
(72) Erfinder: Maile, Bernd, 88422 Oggelshausen (DE)
(74) Vertreter: Grünecker, Kinkeldey, Stockmair & Schwanhäusser

(56) Entgegenhaltungen:
- DE-C- 604 511
- DE-C- 622 880
- DE-C- 703 938
- US-A- 2 004 618
- US-A- 4 565 054
- US-A- 5 035 671

## Beschreibung

Die Erfindung betrifft ein Schneidventil der im Oberbegriff des Patentanspruchs 1 angegebenen Art und ein Verfahren gemäß Oberbegriff des Patentanspruchs 14.

In der Praxis sind Schneidventile bzw. Portioniereinheiten in Form eines Zylinders mit axial beweglichem Kolben bekannt. Der Massestrang wird z.B. über einen seitlichen Einlass in den Zylinder eingeführt, ehe der Abteilkolben durch eine axiale Bewegung eine Portion abteilt und axial abführt.

Hierbei handelt es sich in der Regel entweder um volumetrische Portioniereinheiten oder um kontinuierlich intermittierend arbeitende Portioniereinheiten ohne volumetrische Portionierung. Bei der volumetrischen Portionierung wird die Masse unter einem bestimmten Druck in den definierten Portionierraum gefüllt, die Portion abgeteilt und anschließend ausgeschoben. Dabei muss die Größe des zu füllenden Portionierraums der Portionsgröße angepasst werden. Zudem ist die maximale Portionsgröße durch die maximale Baugröße des Portionierraums begrenzt. Ferner sind im Regelfall zwei getrennt gesteuerte Antriebe erforderlich, da die Abteil- bzw. Schneidfunktion und die Ausschiebefunktion getrennt realisiert werden. Bei der kontinuierlich intermittierenden Portionierung wird häufig nur ein einziger Antrieb benutzt. Die axiale Antriebsbewegung des Kolbens mit seiner Schneidkante resultiert in einer nicht optimalen Schneidfunktion, da ein quetschender Schnitt mit einer rein axialen Drückbewegung der Schneidkante des Kolbens in dem Massestrang durchgeführt wird. Das Produkt im Massestrang wird mehr oder weniger stark gequetscht, was zu Portionsgewichtsschwankungen und unsauberem Schnittbild im Massestrang führt. Dies ist insbesondere bei stückigen oder fasrigen Produkten der Nahrungsmittelindustrie, wie Wurstmasse oder Schinkenmasse, nachteilig, weil Produktanteile beschädigt werden können. Größere Schinkenstücke werden sogar in die Portion gezogen bzw. hineingequetscht. Diese Nachteile können noch dadurch verstärkt werden, dass der eigentlich zum Ausschieben der abgeteilten Portion eingesetzte Kolbenboden gleichlaufend mit der Schneidkante in den Massestrang eintritt, so dass der Druck im Schneidbereich lokal stark ansteigt und zu weiteren Schäden an Produktbestandteilen beiträgt. Die Schneidkante am Rand des Kolbenbodens wird gegebenenfalls an einer sauberen Schnittbewegung an der Gegenkante des Einlasses gehindert.

Aus DE 622 880 C ist eine Wurstfüllvorrichtung bekannt, bei der in einem Zylinderraum eines Gehäuses ein Abteil- und Stopfkolben translatorisch in Richtung der Achse des Zylinderraums und rotatorisch um die Achse des Zylinderraums antreibbar ist. Der Abteil- und Stopfkolben besitzt eine seitliche Tasche und eine Frontalausnehmung. Die Tasche bildet zwei längsverlaufende Schneidkanten. Der Massestrang tritt aus dem seitlich in den Zylinderraum einmündenden Einlass bei zurückgezogenem Abteil- und Stopfkolben über die Tasche in einen freigemachten Teil des Zylinderraums und die Frontausnehmung des Kolbens ein. Der Auslass liegt in etwa diametral zum Einlass und wird beim Abteilen in der zurückgezogenen Position des Abteil- und Stopfkolbens vom Umfang des Stopfkolbens verschlossen. Ist die Portion abgeteilt, deren Größe durch die Tiefenposition des Abteil- und Stopfkolbens im Zylinderraum bemessen wird, wird der Abteil- und Stopfkolben zunächst um seine Achse gedreht, bis er den Einlass mit einer Schneidkante überfährt und verschließt. Dabei erfolgt ein quetschender Schnitt im sich aus dem Einlass in den Zylinderraum erstreckenden Massestrang. Erst sobald beim weiteren Drehen des Abteil- und Stopfkolbens die Schneidkante beginnt, den Auslass freizugeben, kann gleichzeitig der Abteil- und Stopfkolben auch linear verschoben werden, um die Portion durch den Auslass auszuschieben, und zwar bis auf eine durch die Größe der Tasche und der Frontausnehmung begrenzte Restmenge. Danach wird der Abteil- und Stopfkolben gleichzeitig gedreht und zurückgezogen, wobei zunächst der Auslass zunehmend verschlossen und dann der Einlass allmählich wieder geöffnet wird, so dass erneut eine Portion mit dem Massestrang in den sich vergrößernden Zylinderraum eintreten kann. Der quetschende Schnitt, der beim Abteilen der Portion durch die Drehbewegung des Abteil- und Stopfkolbens im Massestrang und relativ zum Einlass ausgeführt wird, ist für bestimmte Massensorten ungünstig.

Aus DE 604 511 C ist ein Kolben für Wurstfüllvorrichtungen bekannt, der aus einer Kolbenplatte und einem Kolbenrohr zweiteilig ausgebildet ist, wobei die Kolbenplatte ein Kolben mit einem Kolbenboden, einer Kolbenschürze und einem innenliegenden Rohrstutzen ist. Zwischen dem Kolbenboden und dem Kolbenrohr ist eine Feder angeordnet. In der Funktionskondition des Kolbens ist die Kolbenplatte über eine Schraube fest mit dem Kolbenrohr verbunden, wobei der Rohrstutzen der Kolbenplatte auf Anschlag mit dem Kolbenrohr ist. Bei einem Abteilvorgang unter Antreiben des Kolbens findet keine relative Bewegung zwischen der Kolbenplatte und dem Kolbenrohr statt. Um die Kolbenplatte zum Zwecke der Reinigung der Vorrichtung herausnehmen zu können, wird die Schraube vollständig gelöst, so dass die Feder die Kolbenplatte selbsttätig aus dem Zylinder herausdrückt, bis die Feder entspannt ist. Dann lässt sich die Kolbenplatte zum Reinigen entnehmen.

Aus DE 1 432 504 A ist es bekannt, zum Portionieren von Wurstbrät im Portionierraum einen Stopfkolben hin- und hergehend beweglich anzuordnen, der unter dem Druck der in den Portionierraum eingefüllten Masse zunächst zurückweicht, und dann durch einen Linearantrieb zum Ausschieben verstellt wird. Der Stopfkolben weist im Kolbenmantel einen allgemein U-förmigen Ausschnitt mit zwei in Umfangsrichtung beabstandeten, annähernd axial verlaufenden Kanten auf und dient eigentlich nur als Drehschieber und Portionsbegrenzer, der in einer Drehposition den Einlass mit dem Portionierraum verbindet, und gleichzeitig den Portionierraum vom Auslass trennt, und in einer anderen Drehstellung den Einlass absperrt und den Portionierraum mit dem Auslass verbindet. Es sind zwei getrennte Antriebe vorhanden, um den Stopfkolben zum Ausschieben linear zu verstellen, und zum Umschalten hin- und herzudrehen. Es wird volumetrisch portioniert, in dem jeweils ein Presskolben in einem an den Einlass angeschlossenen Füllzylinder mit bestimmtem Druck und über einen vorbestimmten Hub verstellt wird. Für die Antriebe ist eine aufwändige Folgesteuerung vorgesehen. Die Kanten des Stopfkolbens führen quetschende Schnitte im Massestrang auf, da der Stopfkolben nur zum Umschalten verdreht wird.

Bei einer aus DE 1 180 151 A bekannten Vorrichtung sind im Portionierraum ein ausschließlich hin- und herdrehbarer Drehschieber und ein ausschließlich linear hin- und herbewegbarer Kolben enthalten, für welche zwei Antriebe benötigt werden. Der Drehschieber führt im Massestrang jeweils einen quetschenden Schnitt durch.

Weiterer Stand der Technik ist zu finden in DE 703 938 C, US 4 565 054 A, US 2 004 618 A und US 5 035 671 A.

Der Erfindung liegt die Aufgabe zugrunde, ein Schneidventil der eingangs genannten Art sowie ein Verfahren zum Portionieren anzugeben, mit denen das zu portionierende Produkt optimal schonend behandelt wird, und das die Vorteile zweier getrennter Antriebe für das Abteilen und Ausstoßen mit den Vorteilen nur eines einzigen Antriebs vereinigt.

Die gestellte Aufgabe wird mit den Merkmalen des Patentanspruchs 1 und des Patentanspruchs 14 gelöst.

Da der Abteil-Kolben beim Abteilen zu einer Schraubbewegung mit gleichzeitigen translatorischen und rotatorischen Bewegungskomponenten antreibbar ist, wird von der Schneidkante im Massestrang ein gezogener Schnitt durchgeführt, der fasrige oder stückige Produktbestandteile optimal schonend behandelt und sauber abtrennt. Die Schraubbewegung ist vorteilhafterweise mit einem einzigen Antrieb z.B. für den Abteil-Kolben realisierbar, so dass sich ein einfacher und kompakter Aufbau des Schneidventils ergibt. Aufgrund der sauberen Schneidverhältnisse und der schonenden Massebehandlung ergeben sich ferner exakt eingehaltene Portionsgewichte.

Bei einer besonders zweckmäßigen Ausführungsform, gegebenenfalls mit eigenständiger erfinderischer Bedeutung, gibt der Kolbenboden axial beweglich gegen Federkraft nach, während die Portion vom Abteil-Kolben aus dem Massestrang abgeteilt wird. Dadurch wird ein Quetscheffekt des Kolbenbodens auf den Massestrang minimiert, werden fasrige oder stückige Produktbestandteile noch schonender behandelt, und wird so beim Abteilen abhängig vom Schneiddruck zusätzlicher Raum für das zu portionierende Produkt freigemacht, was u. a. zur weiteren Optimierung des Schnitts beiträgt. Obwohl die Schraubenbewegung der Schneidkante oder die axiale Nachgiebigkeit des Kolbenbodens jeweils für sich zur Optimierung des Schnitts beitragen, ist die Kombination der beiden Maßnahmen in einem Schneidventil eine optimale Lösung der gestellten Aufgabe.

Bei einer zweckmäßigen Ausführungsform ist der Abteil-Kolben ein Hohlkolben oder Kolbenrohr mit zumindest einem offenen Ende, und ist die Schneidkante am offenen Ende des Abteil-Kolbens angeordnet. Hierbei kann die Schneidkante an einem am offenen Ende, vorzugsweise austauschbar, angeordneten Ringeinsatz vorgesehen sein. Dies ermöglicht es, beispielsweise die Schneidkante aus einem hochwertigeren Material auszubilden als den Abteil-Kolben, dessen Material beispielsweise im Hinblick auf optimierte Gleiteigenschaften gewählt wird.

Bei einer zweckmäßigen Ausführungsform ist der Abteil-Kolben mit einem zunächst translatorische Bewegungskomponenten erzeugenden Linearantrieb verbunden. Um die Schraubenbewegung der Schneidkante zu erzeugen, ist zwischen dem Abteil-Kolben und dem Linearantrieb oder dem Portionierraum ein Getriebe angeordnet, mit dem aus der translatorischen Bewegungskomponente gleichzeitig die rotatorische Bewegungskomponente abgeleitet und auf den Kolben übertragen wird. Es ist somit nur ein einziger Antrieb erforderlich. Dies soll jedoch nicht ausschließen, gegebenenfalls für die rotatorischen Bewegungskomponenten einen anderen, das Getriebe ersetzenden Antrieb einzusetzen.

Baulich einfach besteht das Getriebe aus wenigstens einem bezüglich der Kolbenachse seitlichen Eingriffselement und einer gewindegangartigen Führungsbahn für das Eingriffselement. Mit dem Kolben ist entweder das Eingriffselement oder die Führungsbahn verbunden. An der anderen Komponente des Schneidventils ist dann die Führungsbahn bzw. das Eingriffselement angeordnet.

Bei einer bevorzugten Ausführungsform ist die Führungsbahn innen im als Zylinder mit dem seitlich positionierten Einlass für den Massestrang ausgebildeten Portionierraum angeordnet. Vorzugsweise wird die Führungsbahn direkt in einer Innenwand des Zylinders oder noch besser in einer im Zylinder angeordneten Führungshülse für den Abteil-Kolben vorgesehen. Die Verwendung der Führungshülse bietet den Vorteil, eine gute Reib- und Führungspaarung zwischen dem Abteil-Kolben und der Führungshülse unabhängig vom Material des Zylinders zu realisieren.

Im Falle der Führungshülse ist der Einlass in den Zylinder durch eine seitliche Öffnung in der Führungshülse verlängert. Zweckmäßig bildet ein innenliegender Öffnungsrand in der Führungshülse eine beim Abteilen einer Portion mit der Schneidkante des Abteil-Kolbens zusammenarbeitende Gegenschneidkante, so dass der gezogene Schnitt für das Produkt schonend zwischen zwei relativ scharfen Schneidkanten durchgeführt wird.

Bei einer zweckmäßigen Ausführungsform ist der Einlass kreisrund oder oval bzw. schlitzförmig, wobei die Achse des Ovals oder des Schlitzes in Ausschieberichtung des Abteil-Kolbens entgegengesetzt zur Drehrichtung der Schneidkante schräggestellt ist. Dadurch entsteht bereits aus der translatorischen Bewegungskomponente ein gezogener Schnitt, der dann durch die rotatorische Bewegungskomponente noch intensiviert werden kann. Die Schneidkante kann in einer Radialebene des Abteil-Kolbens liegen oder zumindest in einem Teilabschnitt relativ zur Kolbenachse schräggestellt sein, um unter Nutzen der rotatorischen Bewegungskomponente die Wirkung des gezogenen Schnitts im Massestrang zu intensivieren.

Zweckmäßig erstreckt sich die Führungsbahn in Umfangsrichtung über ein Maß, das zumindest der in Umfangsrichtung gesehenen Weite des Einlasses entspricht, so dass durchgehend beim Überfahren des Einlasses ein gezogener Schnitt ausgeführt wird. Die Schraubbewegung hat im Übrigen auch einen vorteilhaften Einfluss auf die Standzeit der Schneidkante, da die Schneidarbeit auf eine größere Länge der Schneidkante verteilt werden kann, als es der in Umfangsrichtung gesehenen Weite des Einlasses entspräche.

Um zu vermeiden, die Schneidkante mit der Schraubbewegung anzutreiben, wenn die Schneidkante noch nicht oder nicht mehr in den Massestrang eingedrungen ist, weist die Führungsbahn zweckmäßig anschließend an einen mit einer Gewindesteigung verlaufenden Mittelabschnitt in etwa axiale Endabschnitte auf. Bei der Bewegung des Eingriffselementes in den axialen Abschnitten werden keine dann nicht für den Schnitt nutzbaren rotatorischen Bewegungskomponenten erzeugt.

Zweckmäßig ist die Gewindegangsteigung der Führungsbahn steiler als eine Selbsthemmungssteigung, so dass die für den Antrieb des Abteil-Kolbens aufzubringende Arbeit moderat ausfällt. Hierbei kann die Gewindegangsteigung, zumindest über einen Teil der translatorischen Bewegungskomponente, gleichmäßig oder variabel sein. Bei gleichmäßiger Gewindegangsteigung wird auch ein gleichmäßig ablaufender gezogener Schnitt durchgeführt. Bei einer variablen Gewindesteigung kann beispielsweise beim Eindringen der Schneidkante in den Massestrang und/oder kurz vor dem Austreten der Schneidkante aus dem Massestrang oder bewusst in der Massestrangmitte eine vorübergehend stärkere oder schwächere rotatorische Bewegungskomponente erzeugt werden, um einen lokal angepassten gezogenen Schnitt zu erzielen.

Bei einer günstigen Ausführungsform ist der Kolbenboden im Kolbeninneren verschiebbar geführt und wird zumindest eine Feder zwischen dem Kolbenboden und einem Federwiderlager im Abteil-Kolben angeordnet. Für den Kolbenboden kann in Ausschieberichtung z. B. ein im Abteil-Kolben vorgesehener Anschlag eine Endstellung definieren. Dies ermöglicht es, beispielsweise die Feder mit Vorspannung einzusetzen, um bei einer volumetrischen Portionierung das Druckansprechverhalten des Kolbenbodens nach Bedarf einzustellen. Hierbei kann die Federkraft oder Federrate der Feder abhängig von der Druckbeaufschlagungsfläche des Kolbenbodens geringer gewählt werden als die zumindest beim Abteilen der Portion aus dem Massestrang aus dem Zuführdruck der Masse auf die Druckbeaufschlagungsfläche des Kolbenbodens resultierende Kraft. Die Federkraft kann sogar abhängig vom Schneiddruck gewählt werden. Der Kolbenboden gibt zuverlässig nach, um zusätzlichen Raum zu schaffen, und der Schneidkante einen freien gezogenen Schnitt zu ermöglichen.

Bei einer baulich einfachen Ausführungsform ist der Abteil-Kolben ein Kolbenrohr, das verdrehfest auf einem Stößel sitzt, ist das Eingriffselement ein Querzapfen im Stößel, wobei der Querzapfen mit mindestens einem Ende in eine Führungsbahn in der Führungshülse eingreift, und ist der Linearantrieb des Abteil-Kolbens ein am Ende des Portionierraumes angeordneter Druckluft- oder Hydraulikzylinder mit einer mit dem Stößel gekoppelten Kolbenstange. Hierbei kann der Stößel mit der Kolbenstange oder mit dem Kolben des Linearantriebs drehbar verbunden sein, so dass der Drehwiderstand des Kolbens des Linearantriebs die rotatorischen Bewegungskomponenten der Schneidkante nicht hemmt. Bei einer ebenfalls möglichen, starren Verbindung zwischen der Kolbenstange und dem Stößel dreht sich hingegen der Kolben des Linearantriebs mit, wenn die Schneidkante gedreht wird.

Bei dem verfahrensmäßig im Massestrang gezogen ausgeführten Schnitt werden Massebestandteile sehr schonend behandelt und ergeben sich exakt einzuhaltende Portionsgrößen bzw. Portionsgewichte, da ein Quetschen der Massenbestandteile beim Abteilen weitestgehend vermieden wird. Die Schraubbewegung kann entweder durch Antreiben des Abteil-Kolbens oder des den Portionierraum bildenden Zylinders erzeugt werden, oder durch gleichzeitiges Antreiben des Portionierraumes und des Abteil-Kolbens.

Verfahrensgemäß lassen sich ferner bei dem gezogenen Schnitt die Schneidverhältnisse optimieren, wenn der zum Ausschieben der Portion vorgesehene Kolbenboden des Abteil-Kolbens durch die Masse entgegengesetzt zur Ausschieberichtung relativ zum Abteil-Kolben abgefedert verlagert wird. Auf diese Weise wird für das Arbeiten der Schneidkante auch zusätzlicher Raum freigegeben. Der Kolbenboden kann bereits voreilend zum gezogenen Schnitt und/oder während des gezogenen Schnittes gegen die elastische Kraft verlagert werden.

Ausführungsformen des Erfindungsgegenstandes werden anhand der Zeichnungen erläutert. Es zeigen:
- Fig. 1: einen Axialschnitt eines Schneidventils, in einer Vorbereitungsphase einer Portionierung,
- Fig. 2: eine Perspektivdarstellung eines Details aus Fig. 1.
- Fig. 3: eine Schemadarstellung zur Erläuterung der Funktion des Schneidventils der Fig. 1 und 2, und
- Fig. 4: eine Schemadarstellung einer Detailvariante.

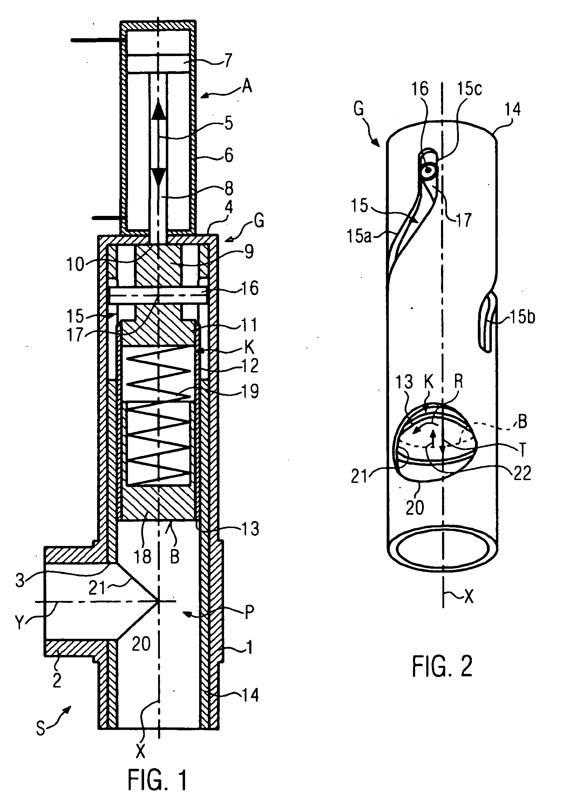

In Fig. 1 ist in einem Schneidventil S zum Portionieren einer pastösen Masse ein Portionierraum P in einem einendig offenen Zylinder 1 enthalten, der zumindest einen seitlichen Anschlussstutzen 2 besitzt, der mit einer Speicher- und/oder Fördereinheit (nicht gezeigt) für die pastöse Masse, beispielsweise ein Produkt der Nahrungsmittelindustrie wie z.B. Wurstbrät oder Schinken oder Schinkenmasse mit stückiger oder fasriger Konsistenz, verbunden wird. Der Anschlussstutzen 2 begrenzt einen hier seitlichen Einlass 3 in den Portionierraum P. Durch den Einlass 3 wird ein Massestrang zugeführt, aus dem das Schneidventil S intermittierend Portionen abteilt und z. B. durch Ausschieben, abgibt.

Der Zylinder 1 besitzt einen Boden 4 mit einer Durchgangsöffnung für eine Kolbenstange 8 eines Linearantriebs A, dessen Gehäuse 6 auf dem Boden 4 oder benachbart zu diesem angeordnet ist und einen Kolben 7 enthält. Der Linearantrieb A ist beispielsweise ein Druckluft- oder Hydraulikzylinder. Alternativ käme auch ein elektromechanischer Spindelantrieb oder dgl. als Linearantrieb A in Frage.

Die Kolbenstange 8 ist mit einem im Querschnitt z. B. pilzförmigen Stößel 9 im Portionierraum P verbunden, entweder starr, oder drehbar über eine Drehverbindung 10 zwischen der Kolbenstange 8 und dem Stößel 9 oder dem Kolben 7. Der Stößel 9 besitzt einen Bund 11, auf dem ein Abteil-Kolben K fixiert ist. Der Abteil-Kolben K ist in der gezeigten Ausführungsform ein Kolbenrohr 12 mit einer Schneidkante 13 am offenen Ende. Die Schneidkante 13 könnte bei einer alternativen Ausführungsform (nicht gezeigt) an einem am offenen Ende des Kolbenrohres 12 austauschbar angeordneten Ringeinsatz aus dem gleichen oder auch anderem Material als dem Material des Kolbenrohres 12 vorgesehen sein.

Im Zylinder 1 ist innenseitig eine Führungshülse 14 fixiert, in der der Abteil-Kolben K geführt wird. Die Führungshülse 14 leistet hier zusätzlich zur Führungsaufgabe einen Beitrag zu einem Getriebe G, mit dem aus den hin- und hergehenden Bewegungen (Doppelpfeil 5) des Linearantriebes A neben translatorischen (axialen) Bewegungskomponenten T (Fig. 2) gleichzeitig rotatorische Bewegungskomponenten R für die Schneidkante 13 bzw. den Abteil-Kolben K erzeugt werden.

Bei den in den Fig. 1 und 2 gezeigten Ausführungsformen weist das Getriebe G wenigstens eine Führungsbahn 15 für ein Eingriffselement 16 auf, wobei das jeweilige Eingriffselement 16 ein Ende eines Querzapfens 17 im Stößel 9 ist. In der Führungshülse 14 sind hier zwei diametral gegenüberliegende Führungsbahnen 15 geformt, entweder als durchgehende Schlitze oder als Nuten, die gewindegangartige Verläufe besitzen. Gemäß Fig. 2 schließen sich an den gewindegangartigen Verlauf der Führungsbahn 15 an beiden Enden axiale Führungsbahnabschnitte 15a, 15b an. Der in Fig. 2 obere axiale Verlauf 15b könnte sich bis zum offenen Ende der Führungshülse 14 erstrecken (zur vereinfachten Montage des Stößels 9 und des Abteil-Kolbens K).

Der Abteil-Kolben K weist in der gezeigten Ausführungsform einen axial beweglich geführten Kolbenboden B auf, der z.B. ein Topfkolben 18 im Inneren des Kolbenrohres 12 ist, und durch eine Feder 19 axial nachgiebig abgestützt ist. Die Feder 19 stützt sich ihrerseits an dem als Federwiderlager fungierenden Stößel 9 ab. Zwischen dem Kolbenboden B und dem Abteil-Kolben K kann ein nicht dargestellter Anschlag vorgesehen sein, um die Ausfahrbewegung des Kolbenbodens B in Ausschieberichtung (in Fig. 1 nach unten) zu begrenzen. Dann könnte die Feder 19 mit Vorspannung eingesetzt sein.

Der Einlass 3 des Zylinders 1 ist durch einen Einlass 20 in der Führungshülse 14 verlängert, wobei der Einlass 20 zur Zusammenarbeit mit der Schneidkante 13 an der Innenwand eine scharfe Schneidkante 21 bilden kann.

Fig. 2 deutet in dem Einlass 20 an, wie beim Abteilen einer Portion aus dem Massestrang die Schneidkante 13 des Abteil-Kolbens die Gegenschneidkante 21 in Ausschieberichtung mit einer translatorischen Bewegungskomponente T überfährt und dabei gleichzeitig eine rotatorische Bewegungskomponente R (eine Schraubbewegung) ausführt, so dass zwischen der Schneidkante 13 und der Gegenschneidkante 21 im Massestrang ein gezogener Schnitt ausgeführt wird. Beim Schnitt kann der Kolbenboden B abhängig vom Schneiddruck in Richtung eines Pfeiles 22 gegen die Kraft der Feder 19 zurückweichen, dadurch seine Quetschwirkung im Massestrang minimieren und zusätzlichen Raum für die Portion freigeben. Durch das Zurückweichen des Kolbenbodens B kann ferner die Schneidkante 13 optimal zur Wirkung kommen.

Die Führungsbahn 15 ist in Fig. 2 mit gleichmäßiger Gewindesteigung 15c dargestellt, so dass über den axialen Bereich der translatorischen Bewegungskomponente T eine stetige rotatorische Bewegungskomponente R erzeugt wird, innerhalb derer die Schneidkante 13 den Einlass 20 überfährt. Alternativ könnte die Gewindesteigung variabel sein, um beispielsweise am Beginn und/oder gegen Ende des Abteilvorgangs oder auch in der Mitte des Massestrangs eine vorübergehend progressivere oder degressivere rotatorische Bewegungskomponente R zu erzeugen, d.h. den gezogenen Schnitt lokal zu intensivieren, bzw. zu reduzieren.

Bei einer nicht gezeigten Alternative könnte das Getriebe G auch direkt zwischen dem Zylinder 1 und dem Stößel 9 (oder dem Abteil-Kolben K) vorgesehen sein (ohne die Führungshülse 14). Ferner wäre es möglich, das Getriebe G im Linearantrieb A unterzubringen.

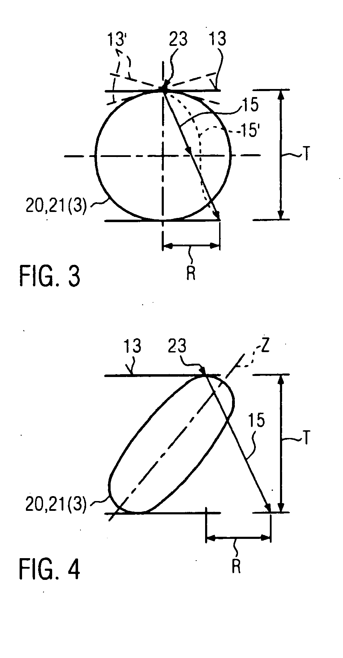

Fig. 3 verdeutlicht schematisch den Ablauf bei einem Abteilvorgang einer Portion aus einem Massestrang. Die Schneidkante 21 des Einlasses 20 ist kreisrund, während die Schneidkante 13 in einer Radialebene des Abteil-Kolbens K gerade verläuft. 23 verdeutlicht den ersten Berührungspunkt der Schneidkante 13 mit dem Einlass 20. Während die Schneidkante 13 den Einlass 20 überfährt, führt sie gleichzeitig die translatorische Bewegungskomponente T und die überlagernde rotatorische Bewegungskomponente R aus, so dass sich der Berührungspunkt 23 allmählich immer weiter nach rechts verlagert und im ortsfest eintretenden Massestrang ein gezogener Schnitt durchgeführt wird.

In einer Abwicklung der Führungshülse 14 von Fig. 2 kann die Führungsbahn 15 in etwa einer Geraden folgen, so dass die rotatorische Bewegungskomponente R gleichmäßig und direkt proportional zur translatorischen Bewegungskomponente T erzeugt wird.

Ist die Gewindesteigung z. B. der Führungsbahn 15' hingegen variabel, so nimmt die rotatorische Bewegungskomponente R beispielsweise am Anfang und gegen Ende des Abteilvorgangs oder auch in der Mitte des Massestrangs progressiv zu und dann wieder ab.

In Fig. 4 ist für eine Alternative eines Schneidventils S ein schlitzförmiger oder ovaler Einlass 20, 21 bzw. 3 angedeutet, dessen Oval- oder Schlitzachse Z entgegengesetzt schräg zur Gewindesteigung der Führungsbahn 15 verläuft. Der gezogene Schnitt wird so zusätzlich intensiviert. Der Massestrang verlagert sich sozusagen bei der Schneidbewegung der Schneidkante 13 entgegengesetzt zur rotatorischen Bewegungskomponente R.

Bei den Ausführungsformen der Fig. 1 bis 4 wird der Abteil-Kolben K relativ zum Einlass 3 zu der Schraubbewegung angetrieben. Alternativ könnte auch der Zylinder 1 relativ zum Abteil-Kolben K oder könnten sowohl der Abteil-Kolben K als auch der Zylinder 1 angetrieben werden, um im Resultat den gezogenen Schnitt im Massestrang zu erzeugen.

Mit dem Schneidventil S wird ein Verfahren zum Portionieren durchgeführt, bei dem zum Abteilen der Portion im Massestrang ein Massebestandteile sehr schonend behandelnder, gezogener Schnitt ausgeführt wird, aus dem exakt eingehaltene Portionsgrößen bzw. - gewichte resultieren. Zum Ausführen des gezogenen Schnitts wird entweder der Abteil-Kolben K oder der Zylinder 1, oder werden diese beiden Komponenten des Schneidventils S entsprechend angetrieben. Flankierend kann voreilend zum oder während des gezogenen Schnitts die Masse den an sich zum Ausschieben der Portion vorgesehenen, relativ beweglichen Kolbenboden (B) federnd entgegengesetzt zur Ausschieberichtung im Abteil-Kolben K verlagern, um weitgehend optimale Schneidverhältnisse zu bewirken.

## Patentansprüche

1. Schneidventil (S) zum Portionieren einer pastösen Masse, insbesondere von Produkten stückiger oder faseriger Konsistenz, wie Wurst- oder Schinkenmasse, mit einem in einem wenigstens einen seitlichen Einlass (3) für einen Massestrang aufweisenden Portionierraum (P) zu einer Portionierbewegung relativ zum Einlass (3) antreibbaren Abteil-Kolben (K), der eine beim Abteilen einer Portion über den Einlass (3) hinwegbewegbare Schneidkante (13, 13') aufweist, **dadurch gekennzeichnet, dass** der Abteil-Kolben (K) beim Abteilen zu einer Schraubbewegung mit gleichzeitigen translatorischen und rotatorischen Bewegungskomponenten (T, R) antreibbar ist, und mit der Schneidkante (13, 13') zum Abteilen der Portion einen gezogenen Schnitt durch den Massestrang durchführt.

2. Schneidventil nach Anspruch 1, **dadurch gekennzeichnet, dass** der Abteil-Kolben (K) zum Ausschieben der aus dem Massestrang abgeteilten Portion einen Kolbenboden (B) enthält, der beim Abteilen der Portion axial relativ beweglich und in Ausschieberichtung der Portion federbelastet ist.

3. Schneidventil nach Anspruch 1, **dadurch gekennzeichnet, dass** der Abteil-Kolben (K) ein Hohlkolben oder Kolbenrohr (12) mit zumindest einem offenen Ende ist, und die Schneidkante (13) am offenen Ende aufweist, vorzugsweise an einem am offenen Ende, vorzugsweise austauschbar, angeordneten Ringeinsatz.

4. Schneidventil nach Anspruch 1, **dadurch gekennzeichnet, dass** der Abteil-Kolben (K) mit einem die translatorischen Bewegungskomponenten (T) erzeugenden Linearantrieb (A) verbunden ist, und dass zwischen dem Abteil-Kolben (K) und entweder dem Linearantrieb (A) oder dem Portionierraum (P) ein Getriebe (G) angeordnet ist, mit dem aus den translatorischen Bewegungskomponenten (T) gleichzeitig die rotatorischen Bewegungskomponenten (R) ableitbar und auf den Abteil-Kolben (K) übertragbar sind.

5. Schneidventil nach Anspruch 4, **dadurch gekennzeichnet, dass** das Getriebe (G) wenigstens ein bezüglich der Kolbenachse (X) seitliches Eingriffselement (16) und wenigstens eine gewindegangartige Führungsbahn (15, 15') für das Eingriffselement (16) aufweist, und dass entweder das Eingriffselement (16) oder die Führungsbahn (15) mit dem Abteil-Kolben (K) verbunden oder die Führungsbahn (15, 15') bzw. das Eingriffselement (16) stationär angeordnet ist.

6. Schneidventil nach Anspruch 5, **dadurch gekennzeichnet, dass** die Führungsbahn (15, 15') innen im als Zylinder (1) mit dem seitlich positionierten Einlass (3) ausgebildeten Portionierraum (P) vorgesehen ist, vorzugsweise entweder direkt in einer Innenwand des Zylinders (1) oder in einer im Zylinder (1) angeordneten Führungshülse (14) für den Abteil-Kolben (K).

7. Schneidventil nach Anspruch 6, **dadurch gekennzeichnet, dass** der Einlass (3) in den Zylinder (1) durch eine seitliche Öffnung (20) in der Führungshülse (14) verlängert ist, und dass ein innen liegender Öffnungsrand eine beim Abteilen einer Portion mit der Schneidkante (13, 13') des Abteil-Kolbens (K) zusammenwirkende Gegenschneidkante (21) der Führungshülse (14) bildet.

8. Schneidventil nach Anspruch 1, **dadurch gekennzeichnet, dass** der Einlass (3, 20) entweder kreisrund oder oval bzw. schlitzförmig ist, wobei die Oval- oder Schlitzachse (Z) in Ausschieberichtung der Portion entgegengesetzt zur Richtung der rotatorischen Bewegungskomponente (R) des Abteil-Kolbens (K) beim Abteilen schräggestelt ist, und dass die Schneidkante (13, 13') entweder in einer Radialebene des Abteil-Kolbens (K) liegt oder zumindest bereichsweise relativ zur Kolbenachse (X) schräg verläuft.

9. Schneidventil nach Anspruch 5, **dadurch gekennzeichnet, dass** sich die Führungsbahn (15) in Umfangsrichtung über ein Maß erstreckt, das mindestens der in Umfangsrichtung gesehenen Weite des Einlasses (3, 20) entspricht.

10. Schneidventil nach Anspruch 5, **dadurch gekennzeichnet, dass** die Führungsbahn (15, 15') an zumindest einem Ende eines gewindegangartigen Mittelabschnitts (15c) einen in etwa axialen Abschnitt (15a, 15b) aufweist.

11. Schneidventil nach Anspruch 5, **dadurch gekennzeichnet, dass** die Gewindegangsteigung der Führungsbahn (15, 15') steiler als eine Selbsthemmungssteigung ist, vorzugsweise etwa 45° oder mehr beträgt, und gleichmäßig oder variabel ist.

12. Schneidventil nach Anspruch 2, **dadurch gekennzeichnet, dass** der Kolbenboden (B) im Abteil-Kolben (K) verschiebbar geführt ist, und dass wenigstens eine Feder (19) zwischen dem Kolbenboden (B) und einem Federwiderlager des Abteil-Kolbens (K) angeordnet ist.

13. Schneidventil nach wenigstens einem der vorhergehenden Ansprüche, **dadurch gekennzeichnet, dass** der Abteil-Kolben (K) ein verdrehfest auf einem Stößel (9, 11) sitzendes Kolbenrohr (12) aufweist, dass das Eingriffselement (16) an einem Querzapfen (17) im Stößel (9, 11) vorgesehen ist, dass beide Enden des Querzapfens 17 in je eine von zwei Führungsbahnen (15, 15') in der Führungshülse (14) eingreifen, und dass der Linearantrieb (A) ein Druckluft- oder Hydraulikzylinder (6) mit einer mit dem Stößel (9) gekoppelten Kolbenstange (8) ist, und dass, vorzugsweise, zwischen der Kolbenstange 8 und dem Stößel (9) oder einem Kolben (7) des Zylinders (6) eine Drehverbindung (10) vorgesehen ist.

14. Verfahren zum Portionieren einer pastösen Masse, insbesondere von Produkten stückiger oder faseriger Konsistenz, wie Wurst- oder Schinkenmasse, mit einem Schneidventil (S), das in einem wenigstens einen seitlichen Einlass (3) für einen Massestrang aufweisendem Portionierraum (P) einen Abteil-Kolben (K) mit einer Schneidkante (13) aufweist, die beim Abteilen einer Portion in einer durch einen Antrieb (A) bewirkten Relativbewegung und in einem Schnitt durch den Massestrang den Einlass (3) überfährt, **dadurch gekennzeichnet, dass** beim Abteilen der Portion in dem Massestrang mit der Schneidkante (13) ein gezogener Schnitt ausgeführt wird, indem zwischen dem Abteil-Kolben (K) und dem Einlass (3) eine relative Schraubbewegung mit gleichzeitigen translatorischen und rotatorischen Bewegungskomponenten (T, R) erzeugt wird.

15. Verfahren nach Anspruch 14, **dadurch gekennzeichnet, dass** ein zum Ausschieben der abgeteilten Portion vorgesehener Kolbenboden (B) des Abteil-Kolbens (K) durch die Masse voreilend zum und/oder während des gezogenen Schnitts entgegengesetzt zur Ausschieberichtung und relativ zum Abteil-Kolben (K) abgefedert verlagert wird.

## Claims

1. A cutting valve (S) for portioning a paste-like mass, particularly products of lumpy or fibrous consistency, such as a sausage or ham mass, comprising a partitioning piston (K) which is drivable in a portioning chamber (P) having at least one lateral inlet (3) for a mass strand to carry out a portioning movement relative to the inlet (3) and which comprises a cutting edge (13, 13') which is movable to sweep over the inlet (3) while a portion is being partitioned, **characterised in that** the partitioning position (K) in the partitioning process is drivable to perform a helical movement with simultaneous translatory and rotatory movement components (T, R), and carries out a draw cut with the cutting edge (13, 13') in the mass strand.

2. The cutting valve according to claim 1, **characterised in that** the partitioning piston (K) includes piston bottom (B) for discharging the portion partition off from the mass strand, the piston bottom being spring-loaded in the discharge direction of the portion and being axially relatively movable while partitioning the portion.

3. The cutting valve according to claim 1, **characterised in that** the partitioning piston (K) is a hollow piston or piston tube (12) with at least one open end, the cutting edge (13) being provided at the open end, preferably on a ring insert arranged, preferably exchangeably, on the open end.

4. The cutting valve according to claim 1, **characterised in that** the partitioning piston (K) is connected to a linear drive (A) generating the translatory movement components (T), and that a gearing (G) is arranged between the partitioning piston (K) and either the linear drive (A) or the portioning chamber (P), with which gearing the rotatory movement components (R) are derivable at the same time from the translatory movement components (T) and are transmittable to the partitioning piston (K).

5. The cutting valve according to claim 4, **characterised in that** the gearing (G) comprises at least one engagement element 16), which is provided sidewards relative to the piston axis (X), and at least one thread-like guide track (15, 15') for the engagement element (16), and that either the engagement element (16) or the guide track (15) is connected to the partitioning piston (K), or the guide track (15, 15') or the engagement element (16), respectively, is arranged in a stationary manner.

6. The cutting valve according to claim 5, **characterised in that** the guide path (15, 15') is provided in the interior of the portioning chamber (P) formed as a cylinder (1) with the laterally positioned inlet (3), preferably either directly in an inner wall of the cylinder (1) or in a guide sleeve (14) for the partitioning piston (K) arranged in the cylinder.

7. The cutting valve according to claim 6, **characterised in that** the inlet (3) into the cylinder (1) is extended through a lateral opening (20) in the guide sleeve (14), and that an edge located on the inside of the opening forms a counter cutting edge (21) of the guide sleeve (14) co-operating with the cutting edge (13, 13') of the partitioning piston (K) while a portion is partitioned.

8. The cutting valve according to claim 1, **characterised in that** the inlet (3, 20) is either circular or oval or slit-shaped, respectively, the oval or slit axis (Z) being inclined in the discharge direction of the portion and in a direction opposite to the direction of the rotatory movement component (R) of the partitioning piston (K) during the partitioning process, and that the cutting edge (13, 13') either is positioned in a radial plane of the partitioning piston (K) or extends at least in some regions obliquely relative to the piston axis (X).

9. The cutting valve according to claim 5, **characterised in that** the guide track (15) extends in circumferential direction over a measure corresponding at least to the width of the inlet (3, 20), viewed in circumferential direction.

10. The cutting valve according to claim 5, **characterised in that** the guide track (15, 15') comprises an approximately axial section (15a, 15b) on at least one end of the thread-like middle section (15c).

11. The cutting valve according to claim 5, **characterised in that** the thread pitch of the guide track (15, 15') is steeper than a self-locking pitch, preferably amounts to about 45° or more, and is uniform or variable.

12. The cutting valve according to claim 2, **characterised in that** the piston bottom (B) is displaceably guided in the partitioning piston (K), and that at least one spring (19) is arranged between the piston bottom (B) and a spring abutment of the partitioning piston (K).

13. The cutting valve according to at least one of the preceding claims, **characterised in that** the partitioning piston (K) comprises a piston tube (12) non-rotatably seated on a plunger (9, 11), that the engagement element (16) is provided on a transverse pin (17) in the plunger (9, 11), that both ends of the transverse pin (17) engage into a respective one of two guide tracks (15, 15') in the guide sleeve (14), that the linear drive (A) is a compressed-air or hydraulic cylinder (6) with a piston rod (8) of a piston (7) coupled with the plunger (9), and that the rotary connection (10) is provided preferably between the piston rod (8) and the plunger (9) or the piston (7) of the cylinder (6).

14. A method for portioning a paste-like mass, particularly products of lumpy or fibrous consistency, such as a sausage or ham mass, by use of a cutting valve (S) which comprises a partitioning piston (K) with a cutting edge (13) in a portioning chamber (P) having at least one lateral inlet (3) for a mass strand which cutting edge (13), while a portion is partitioned, sweeps over the inlet (3) and in one cut through the mass strand in a relative movement effected by a drive (A); **characterised in that** while partitioning the portion a draw cut is carried out in the mass strand by the cutting edge (13), for which draw cut a relative helical movement with simultaneous translatory and rotatory movement components (T, R) is generated between the partitioning piston (K) and the inlet (3).

15. The method according to claim 14, **characterised in that** a piston bottom (B) provided in the partitioning piston (K) for discharging the partitioned portion is displaced by the mass against spring load relative to the partitioning piston (K) in advance of and/or during the draw cut in a direction opposite to the portion discharge direction

## Revendications

1. Vanne de coupe (S) pour la mise en portions d'une masse pâteuse, en particulier de produits de consistance hachée ou fibreuse, telle que masse de saucisse ou de jambon, comprenant un piston de division (K) entraînable dans un espace de mise en portions (P), qui présente au moins une admission latérale (3) pour un cordon de masse, en un mouvement de mise en portions par rapport à l'admission (3), lequel piston présente une arête de coupe (13, 13') mobile par-dessus l'admission (3) lors du partage d'une portion, **caractérisée en ce que** le piston de division (K) est entraînable, lors du partage, en un mouvement hélicoïdal avec une composante simultanée de translation et de rotation (T, R), et réalise avec l'arête de coupe (13, 13'), pour le partage de la portion, une coupe étirée au travers du cordon de masse.

2. Vanne de coupe suivant la revendication 1, **caractérisée en ce que** le piston de division (K) comporte, pour l'éjection de la portion séparée du cordon de masse, un fond de piston (B) mobile dans la direction axiale lors du partage de la portion et chargé par ressort dans la direction d'éjection de la portion.

3. Vanne de coupe suivant la revendication 1, **caractérisée en ce que** le piston de division (K) est un piston creux ou une chemise de piston (12) avec au moins une extrémité ouverte, et présente l'arête de coupe (13) sur l'extrémité ouverte, de préférence sur une garniture annulaire disposée sur l'extrémité ouverte, préférentiellement interchangeable.

4. Vanne de coupe suivant la revendication 1, **caractérisée en ce que** le piston de division (K) est raccordé à un entraînement linéaire (A), qui génère les composantes de mouvement de translation (T), et qu'une transmission (G) est disposée entre le piston de division (K) et l'entraînement linéaire (A) ou l'espace de mise en portions (P), transmission par laquelle les composantes de mouvement de rotation (R) peuvent découler simultanément des composantes de mouvement de translation (T) et être transmises au piston de division (K).

5. Vanne de coupe suivant la revendication 4, **caractérisée en ce que** la transmission (G) présente au moins un élément de prise (16), latéral par rapport à l'axe de piston (X) , et au moins une coulisse (15, 15') en forme de spire pour l'élément de prise (16), et que l'élément de prise (16) ou la coulisse (15) sont raccordés au piston de division (K), ou la coulisse (15, 15') ou l'élément de prise (16) a une disposition stationnaire.

6. Vanne de coupe suivant la revendication 5, **caractérisée en ce que** la coulisse (15, 15') est prévue intérieurement dans l'espace de mise en portions (P), réalisé sous forme de cylindre (1) avec l'admission (3) positionnée latéralement, de préférence soit directement dans une paroi intérieure du cylindre (1), soit dans une douille de guidage (14) pour le piston de division (K), disposée dans le cylindre (1).

7. Vanne de coupe suivant la revendication 6, **caractérisée en ce que** l'admission (3) est prolongée dans le cylindre (1) par une ouverture latérale (20) de la douille de guidage (14), et qu'un bord d'ouverture intérieur forme une arête de coupe antagoniste (21) de la douille de guidage (14), laquelle arête coopère, lors du partage d'une portion, avec l'arête de coupe (13, 13') du piston de division (K).

8. Vanne de coupe suivant la revendication 1, **caractérisée en ce que** l'admission (3, 20) est soit circulaire, soit ovale ou en forme de fente, l'axe (Z) de l'ovale ou de la fente étant incliné lors du partage, dans la direction d'éjection de la portion, dans le sens contraire à la direction de la composante de mouvement de rotation (R) du piston de division (K), et que l'arête de coupe (13, 13') se situe soit dans un plan radial du piston de division (K), soit s'étend en oblique, au moins par zones, par rapport à l'axe de piston (X).

9. Vanne de coupe suivant la revendication 5, **caractérisée en ce que** la coulisse (15) s'étend dans la direction périphérique sur une mesure, qui correspond au moins à la largeur, prévue dans la direction périphérique, de l'admission (3, 20).

10. Vanne de coupe suivant la revendication 5, **caractérisée en ce que** la coulisse (15, 15') présente une section (15a, 15b) à peu près axiale sur au moins une extrémité d'une section centrale (15c) en forme de spire.

11. Vanne de coupe suivant la revendication 5, **caractérisée en ce que** le pas de vis de la coulisse (15, 15') est plus raide qu'un pas de blocage automatique, est de préférence d'environ 45° ou plus, et est régulier ou variable.

12. Vanne de coupe suivant la revendication 2, **caractérisée en ce que** le fond de piston (B) est guidé mobile dans le piston de division (K), et qu'au moins un ressort (19) est disposé entre le fond de piston (B) et une butée de ressort du piston de division (K).

13. Vanne de coupe suivant l'une au moins des revendications précédentes, **caractérisée en ce que** le piston de division (K) présente une chemise de piston (12) solidaire d'un poussoir (9, 11), que l'élément de prise (16) est prévu sur un tourillon transversal (17) du poussoir (9, 11), que les deux extrémités du tourillon transversal (17) s'engagent chacune dans l'une des deux coulisses (15, 15') de la douille de guidage (14), et que l'entraînement linéaire (A) est un cylindre pneumatique ou hydraulique (6) avec une tige de piston (8) couplée au poussoir (9), et que, de préférence, un joint tournant (10) est prévu entre la tige de piston (8) et le poussoir (9) ou un piston (7) du cylindre (6).

14. Procédé pour la mise en portions d'une masse pâteuse, en particulier de produits de consistance hachée ou fibreuse, telle que masse de saucisse ou de jambon, avec une vanne de coupe (S) qui présente, dans un espace de mise en portions (P) comportant au moins une admission latérale (3) pour un cordon de masse, un piston de division (K) avec une arête de coupe (13), laquelle arête traverse l'admission (3), lors du partage d'une portion, en un mouvement relatif provoqué par un entraînement (A) et en une coupe au travers du cordon de masse, **caractérisé en ce que**, lors du partage de la portion, une coupe étirée est réalisée dans le cordon de masse par l'arête de coupe (13), un mouvement hélicoïdal relatif, avec des composantes simultanées de translation et de rotation (T, R), étant produit entre le piston de division (K) et l'admission (3).

15. Procédé suivant la revendication 14, **caractérisé en ce qu'**un fond de piston (B) du piston de division (K), prévu pour l'éjection de la portion séparée, est déplacé monté sur ressort au travers de la masse en avance de la coupe étirée et/ou pendant cette dernière dans le sens contraire à la direction d'éjection et par rapport au piston de division (K).
